(19) Europäisches Patentamt
European Patent Office
Office européen des brevets

(11) **EP 3 228 929 A1**

(12) **EUROPEAN PATENT APPLICATION**

(43) Date of publication:
**11.10.2017 Bulletin 2017/41**

(51) Int Cl.:
**F21S 8/12** (2006.01)

(21) Application number: **17156556.7**

(22) Date of filing: **16.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.03.2016 JP 2016048191**

(71) Applicant: **STANLEY ELECTRIC CO., LTD.**
**Tokyo 153-8636 (JP)**

(72) Inventor: **SUZUKI, Satoshi**
**Tokyo, 153-8636 (JP)**

(74) Representative: **Carstens, Dirk Wilhelm**
**Wagner & Geyer**
**Gewürzmühlstraße 5**
**80538 München (DE)**

(54) **VEHICLE HEADLIGHT DEVICE**

(57)     Provided is a vehicle headlight device capable of forming a light distribution pattern efficiently with a simple structure. A vehicle headlight device (1) includes: a light-emitting face of a light source (5) constructed by arranging at least one light-emitting element; a condenser lens (7) which collects light emitted from the light-emitting face; a digital mirror (8) which reflects light entering from the condenser lens (7) by using each mirror element; a projection lens (9) which projects a light distribution pattern of light reflected by the digital mirror (8) to an irradiated area S ahead of a vehicle; and a control unit (3) which controls inclined states of plural mirror elements to change an illumination distribution of the light distribution pattern. The light-emitting face of the light source (5) and the collection mirror (8) are similar in shape to each other.

FIG.1

**Description**

BACKGROUND OF THE INVENTION

Field of the Invention

The present invention relates to a vehicle headlight device.

Description of the Related Art

Conventionally, there has been a device configured to control a light distribution pattern not to irradiate a high beam when a camera capturing images ahead of the vehicle detects a preceding vehicle or an oncoming vehicle so that a driver of the preceding vehicle or the oncoming vehicle will not be dazzled by the high beam during nighttime driving of the vehicle.

On this occasion, however, there is a possibility that an obstacle or a pedestrian present in an area in which the high beam is not irradiated cannot be detected with the camera. Therefore, there have been known techniques which change the illumination distribution or irradiation range of the light distribution pattern to fit the surrounding environment and road conditions.

For example, there is a vehicular digital lighting system (see Japanese Patent No. 4055578), which includes an optical engine, a reflection type digital light deflector, a light irradiation device, a storage device, a surrounding environment detecting device, and a control device.

Note particularly that the optical engine reflects light from a discharge lamp (light source) using a reflector to guide the light to a collimator lens where the light is changed to parallel light. Since the reflection type digital light deflector digitally switches the inclined angles of many tiny mirror elements, the parallel light from the collimator lens can be reflected to switch the reflected light in two on/off directions so as to form a light distribution pattern on the side of the light irradiation device.

There is also known a vehicular lighting device (see Japanese Patent Application Laid-Open No. 2016-008043), which includes a light source module, a relay lens module, a light valve, a sensing unit, a projection lens module, and a control unit. The light valve has a micromirror that controls the reflection direction or passage of a light flux to make light emitted from the light source enter the micromirror so that the light will be reflected and projected from the projection lens module.

SUMMARY OF THE INVENTION

However, the system and device disclosed in the above-mentioned documents are both required to have various members other than the light source and lenses, and this makes each design difficult because the structure of the optical system is complicated. There is also a problem that more structural members lead to increases in the cost and size of the system or the device.

The present invention has been made in view of the circumstances, and it is an object thereof to provide a vehicle headlight device capable of forming a light distribution pattern efficiently with a simple structure.

A vehicle headlight device of a first invention, which includes: a light-emitting face on which at least one light-emitting element is arranged; a light-collecting optical member which collects light emitted from the light-emitting face; a collection mirror configured by arranging plural inclinable mirror elements in such a manner that light entering from the light-collecting optical member is reflected by each of the mirror elements; a projection optical member which projects a light distribution pattern of light reflected by the collection mirror to an irradiated area ahead of a vehicle; and a control unit which performs processing to control inclined states of the plural mirror elements of the collection mirror to change an illumination distribution of the light distribution pattern, wherein a shape of the light-emitting face and a shape of the collection mirror are similar to each other.

In this invention, the light emitted from the light-emitting face is collected by the light-collecting optical member to enter the collection mirror. Then, the collection mirror reflects the light entering from the light-collecting optical member toward the projection optical member. The control unit can control the inclined states of the plural mirror elements to form a predetermined light distribution pattern in the irradiated area.

On this occasion, since the light-emitting face and the collection mirror are similar in shape to each other, the light emitted from the light-emitting face is projected to the irradiated area while keeping the shape. Further, when the light emitted from the light-emitting face enters the collection mirror, light deflecting from the collection mirror can be reduced. Thus, the device can form a light distribution pattern efficiently with a simple structure.

The vehicle headlight device of the first invention is also characterized in that, when distortion of the light-collecting optical member is a positive value, the size of the light-emitting face is set smaller than a theoretical size calculated based on a ratio b/a of distance a between the light-emitting face and the light-collecting optical member, and distance b between the light-collecting optical member and the collection mirror, and an irradiated area set on the collection mirror, and when the distortion of the light-collecting optical member is a negative value, the size of the light-emitting face is set larger than the theoretical size (a second invention).

According to this structure, the irradiated area of the light entering the collection mirror is calculated as a product of the ratio b/a (magnifying power) of the distance a between the light-emitting face and the light-collecting optical member, and the distance b between the light-collecting optical member and the collection mirror, and the size of the light-emitting face. When the distortion of the light-collecting optical member is a positive value, the light emitted from the light-emitting face is distorted and hence becomes larger than the irradiated area set on the mirror. Therefore, the size of the light-emitting face is set smaller than the theoretical size so that the light will fit within the irradiated area even when the light is distorted.

On the other hand, when the distortion of the light-collecting optical member is a negative value, the light emitted from the light-emitting face is distorted and hence becomes smaller than the irradiated area set on the mirror. Therefore, the size of the light-emitting face is set larger than the theoretical size so that the light will exceed the irradiated area even when the light is distorted. Thus, the device can adjust the size of the irradiated area on the collection mirror. Further, since the light-emitting face and the collection mirror are similar in shape to each other, the device also has the advantage of being able to form a light distribution pattern easily.

A vehicle headlight device of a third invention, which includes: a light-emitting face on which at least one light-emitting element is arranged; a light-collecting optical member which collects light emitted from the light-emitting face; a collection mirror configured by arranging plural inclinable mirror elements in such a manner that light entering from the light-collecting optical member is reflected by each of the mirror elements; a projection optical member which projects a light distribution pattern of light reflected by the collection mirror to an irradiated area ahead of a vehicle; and a control unit which performs processing to control inclined states of the plural mirror elements of the collection mirror to change an illumination distribution of the light distribution pattern, wherein, when distortion of the light-collecting optical member is a positive value, the size of the light-emitting face is set smaller than a theoretical size calculated based on a ratio b/a of distance a between the light-emitting face and the light-collecting optical member, and distance b between the light-collecting optical member and the collection mirror, and an irradiated area set on the collection mirror, and when the distortion of the light-collecting optical member is a negative value, the size of the light-emitting face is set larger than the theoretical size.

In this invention, the light emitted from the light-emitting face is collected by the light-collecting optical member to enter the collection mirror. Then, the collection mirror reflects the light entering from the light-collecting optical member toward the projection optical member. The control unit controls the inclined states of the plural mirror elements, and this enables the device to form a predetermined light distribution pattern in the irradiated area.

When the distortion of the light-collecting optical member is a positive value, the size of the light-emitting face is set smaller than the theoretical size. Further, when the distortion of the light-collecting optical member is a negative value, the size of the light-emitting face is set larger than the theoretical size. Thus, the device can adjust the size of the irradiated area on the collection mirror.

The vehicle headlight device of the first invention is further characterized in that the light-emitting element is a laser diode or a light-emitting diode (a fourth invention).

Since the light-emitting element is a laser diode or a light-emitting diode in the device, a small light source capable of emitting intense light can be provided.

In the vehicle headlight device of the second invention, the light-emitting element may also be a laser diode or a light-emitting diode.

Further, in the vehicle headlight device of the third invention, the light-emitting element may be a laser diode or a light-emitting diode.

The vehicle headlight device of the fourth invention is also characterized in that the light-emitting face is formed by bundling optical fibers to guide light emitted from the a plurality of the laser diode or a plurality of the light-emitting diode (a fifth invention).

Since the device has the light-emitting face formed by bundling the optical fibers to guide the light emitted from the plurality of the laser diodes or the plurality of the light-emitting diodes, the area of the light-emitting face can be reduced to make an optical system of the device smaller.

Further, the vehicle headlight device of the first invention is characterized by further including a diffuser plate arranged between the light-emitting face and the light-collecting optical member to diffuse light emitted from the light-emitting face, or a phosphor plate with a phosphor applied thereto, which is arranged between the light-emitting face and the light-collecting optical member (a sixth invention).

According to this structure, since the phosphor plate (or the diffuser plate) is arranged between the light-emitting face and the light-collecting optical member, the light emitted from the light-emitting face is irradiated to the phosphor plate to excite fluorescence. Thus, the device can obtain bright light entering the light-collecting optical member.

The vehicle headlight device of the second invention may also include a diffuser plate arranged between the light-emitting face and the light-collecting optical member to diffuse light emitted from the light-emitting face, or a phosphor plate with a phosphor applied thereto, which is arranged between the light-emitting face and the light-collecting optical member.

The vehicle headlight device of the third invention may further include a diffuser plate arranged between the light-emitting face and the light-collecting optical member to diffuse light emitted from the light-emitting face, or a phosphor plate with a phosphor applied thereto, which is arranged between the light-emitting face and the light-collecting optical member.

Further, the vehicle headlight device of the fourth invention may include a diffuser plate arranged between the light-emitting face and the light-collecting optical member to diffuse light emitted from the light-emitting face, or a phosphor plate with a phosphor applied thereto, which is arranged between the light-emitting face and the light-collecting optical member.

Further, the vehicle headlight device of the fifth invention may include a diffuser plate arranged between the light-emitting face and the light-collecting optical member to diffuse light emitted from the light-emitting face, or a phosphor plate with a phosphor applied thereto, which is arranged between the light-emitting face and the light-collecting optical member.

BRIEF DESCRIPTION OF THE DRAWINGS

FIG. 1 is a diagram illustrating the structure of a vehicle headlight device of a first embodiment of the present invention.
FIG. 2 is a view illustrating an array of light-emitting elements of a light source.
FIG. 3 is an overall perspective view of a digital mirror.
FIG. 4A is a diagram for describing an optical system using a single convex lens.
FIG. 4B is a diagram for describing an optical system using lenses.
FIG. 5 is a diagram illustrating the structure of a vehicle headlight device of a second embodiment of the present invention.
FIG. 6 is a diagram illustrating the structure of a vehicle headlight device of a third embodiment of the present invention.
FIG. 7 is a diagram illustrating the structure of a vehicle headlight device of a fourth embodiment of the present invention.

DESCRIPTION OF THE PREFERRED EMBODIMENTS

Vehicle headlight devices according to embodiments of the present invention will be described below.

(First Embodiment)

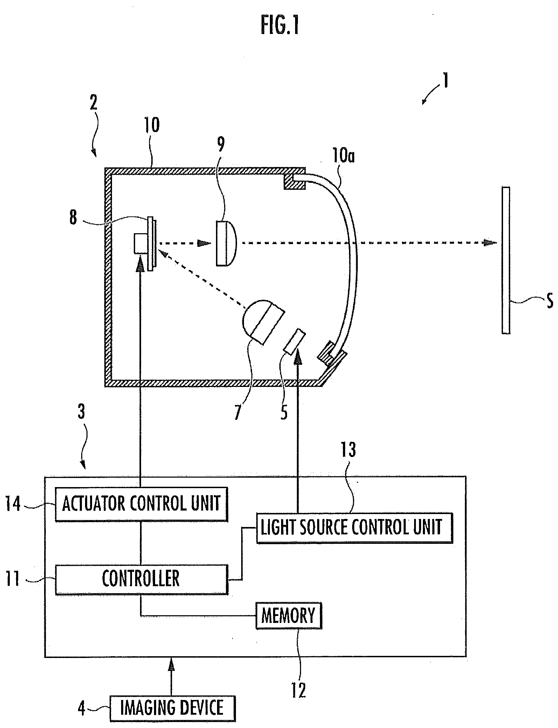

FIG. 1 is a diagram illustrating the structure of a vehicle headlight device 1. The vehicle headlight device 1 is installed in a vehicle and used, which is mainly composed of an optical system 2, a control device 3, and an imaging device 4. In the vehicle headlight device 1, the imaging device 4 provided on the front side of the vehicle (e.g., on the windshield side of the rearview mirror) first captures images ahead of the vehicle. Then, the control device 3 acquires and analyzes information on the images captured by the imaging device 4 to control the optical system 2. Thus, the vehicle headlight device 1 can illuminate an area ahead of the vehicle in a predetermined light distribution pattern.

The optical system 2 is composed of a light source 5, a condenser lens 7, a digital mirror 8, and a projection lens 9, and these members are housed in a casing 10. The light source 5 is made up in such a manner that plural light-emitting diodes (hereinafter called LEDs) are arranged in line and housed in one package.

The on/off and amount of light of each of the LEDs ("light-emitting elements" in the present invention) that constitute the light source 5 can be controlled individually by a light source control unit 13 to be described later. For example, when three LEDs are lined up, the light source control unit 13 can control the amount of light of LEDs on both sides to 30% based on the amount of light of the central LED.

The condenser lens 7 (a "light-collecting optical member" in the present invention) is a convex lens with a thickness (e.g., 17 mm) too thick to ignore, which is arranged between the light source 5 and the digital mirror 8. Although light emitted from the light source 5 is widened with an emission angle, the light is collected through the condenser lens 7 (e.g., a diameter of 10 mm) and enters the digital mirror 8.

The digital mirror 8 (a "collection mirror" in the present invention) reflects the light entering from the condenser lens 7, and emits the light mainly toward the projection lens 9. The digital mirror 8 has a structure in which plural mirror elements inclinable respectively are arrayed. The inclined state (reflection angle) of each mirror element can be controlled by an actuator control unit 14 to be described later.

The projection lens 9 (a "projection optical member" in the present invention) is arranged between the digital mirror 8 and an irradiated area S. The light entering from the digital mirror 8 passes through the projection lens 9 (e.g., a diameter of 25 mm) and a translucent cover 10a of the casing 10 to form an image in the irradiated area S ahead of the vehicle. Note that the optical system 2 is installed on at least each of the right and left of the front side of the vehicle, respectively. A thin lens may be used as the projection lens.

The control device 3 (a "control unit" in the present invention) is composed of at least a controller 11, a memory 12, the light source control unit 13, and the actuator control unit 14. The controller 11 calculates a light distribution pattern based on an image signal ahead of the vehicle, which is captured by the imaging device 4. Then, the controller 11 outputs, to the light source control unit 13 and the actuator control unit 14, a control signal for irradiating the calculated light distribution pattern to the irradiated area S. This enables the controller 11 to change the illumination distribution of the distribution pattern of light irradiated to the irradiated area S.

The memory 12 includes a RAM used by the controller 11 to store predetermined data temporarily during execution of operations, a ROM storing program data to be executed by the controller 11, and a predetermined nonvolatile storage device.

The light source control unit 13 controls driving power to be supplied to the light source 5 to switch between on and off of the light source 5 and to change the amount of light. The actuator control unit 14 not only supplies the driving power to the digital mirror 8 of the optical system 2, but also adjusts the inclined state of each mirror element.

The imaging device 4 may be any device as long as the device can capture images ahead of the vehicle. For example, as the imaging device 4, there is a digital camera capable of capturing visible light images and infrared images, but the imaging device 4 may also be used as a camera for monitoring a pedestrian or an obstacle for the purpose of collision avoidance, and the like.

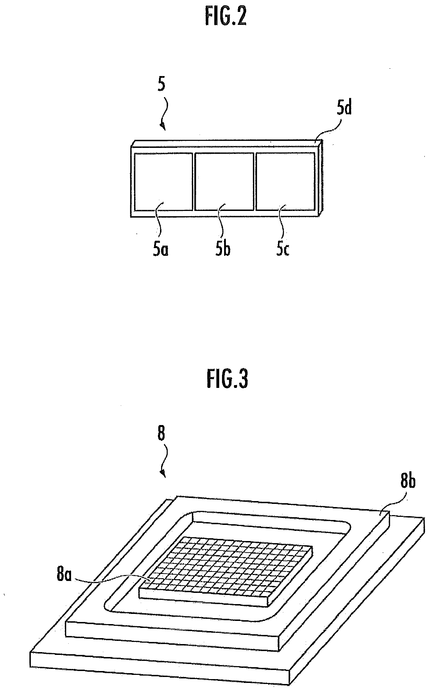

Next, the overall view of the light source 5 is illustrated in FIG. 2.

The light source 5 is composed of three LEDs 5a to 5c, each having a 1 mm × 1 mm square shape (e.g., at a wavelength of 460 nm), and the LEDs are disposed in such a direction to assume the horizontal direction of the light distribution pattern. Further, the LEDs 5a to 5c are housed in an LED package 5d with a slight gap therebetween.

Phosphor-containing resin is applied to the surface of the LEDs 5a to 5c so that blue light emitted from the LEDs 5a to 5c will be irradiated to the phosphor-containing resin to emit white light. Then, the white light is collected by the condenser lens 7. Instead of applying the phosphor-containing resin, a phosphor plate may be placed to come into contact with the front face side of each of the LEDs 5a to 5c. Alternatively, one phosphor plate capable of covering all of the LEDs 5a to 5c may be placed on the front face side of the LEDs 5a to 5c.

Note that a diffuser plate for shaping light in a round (elliptical) form while controlling the diffusion angle can also be used instead of the phosphor plate to achieve the same effect. In this case, a phosphor plate to cover the light-emitting face is required separately in addition to the diffuser plate, where the phosphor plate is placed on the front face of each of the LEDs 5a to 5c, and the diffuser plate is placed in front of the phosphor plate.

Next, an overall perspective view of the digital mirror 8 is illustrated in FIG. 3.

The digital mirror 8 is made up in such a manner that a mirror unit 8a (about 10 mm × 30 mm) with square mirror elements of several tens of μm long is arranged and housed in a mirror package 8b. Each mirror element can reflect incident light in two directions (e.g., +12° or -12°).

In the optical system 2, when the mirror elements reflect the incident light in one direction, since the light travels in the direction of the projection lens 9, the light forms a light distribution pattern. When the mirror elements reflect the incident light in the other direction, since the light deflects from the projection lens 9, the light forms a light shielding pattern that shields the light distribution pattern.

Thus, since the inclined state of each of the mirror elements is controlled by the actuator control unit 14, the vehicle headlight device 1 can form various light distribution patterns in the irradiated area S. The light output from the light source 5 penetrates the phosphor-containing resin and enters the digital mirror 8 with some spread. However, since the actuator control unit 14 finely controls the mirror elements, a determinate light distribution pattern is never blurred.

The mirror unit 8a of the digital mirror 8 is equal in aspect ratio to the light source 5 (light-emitting face), forming a similarity shape. Since the light source 5 and the mirror unit 8a are similar in shape to each other, the light emitted from the light source 5 enters the mirror unit 8a while keeping the shape, and is projected to the irradiated area S. Thus, the vehicle headlight device 1 can form a light distribution pattern with a simple structure. Further, when the light emitted from the light source 5 enters the digital mirror 8, light deflecting from the area of the mirror unit 8a can be reduced, resulting in enhancing the light use efficiency.

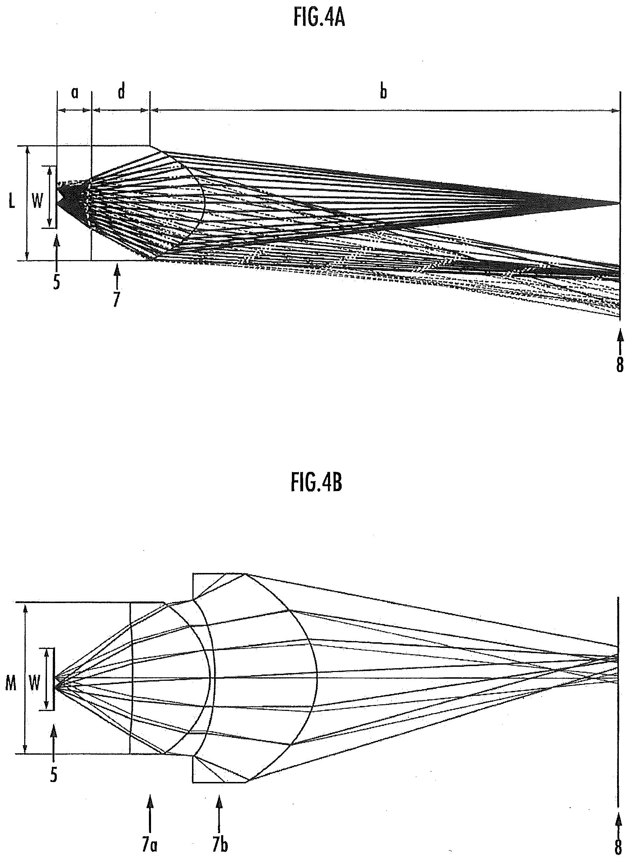

Referring next to FIG. 4A and FIG. 4B, distortion due to the optical system and the condenser lens 7 of the vehicle headlight device 1 will be described.

First, an optical system composed of the same light source 5, condenser lens 7, and digital mirror 8 as those of the optical system 2 (see FIG. 1) is illustrated in FIG. 4A. The light source 5, the condenser lens 7, and the digital mirror 8 (mirror unit 8a) are arranged in such a manner that the center axes of respective members are aligned with one another, distance between the light source 5 and the condenser lens 7 (rear end) is kept at distance a, and distance between the condenser lens 7 (lens unit) and the digital mirror 8 is kept at distance b. Further, a longitudinal width W of the light source 5 is set smaller than a diameter L of the condenser lens 7.

In this case, when the focal length of the condenser lens 7 is denoted as f, the following relation (lens equation) is established:

$$\frac{1}{a} + \frac{1}{b} = \frac{1}{f} \quad \cdot\cdot\cdot (1)$$

Further, the size of an image obtained by projecting the light emitted from the light source 5 to the digital mirror 8 becomes b/a times the light source 5 (the area s of the light-emitting face). Therefore, the irradiated area on the digital mirror 8 calculated from the distances a, b, and the area s in this example becomes sb/a.

The condenser lens 7 is a thick convex lens with a thickness d and having a small convex portion on the side of the light source 5 as well. The condenser lens 7 is required to have a thickness enough to adjust the magnifying power b/a determined by the positions of the light source 5 and the digital mirror 8 without virtually changing the curvature of the lens convex surface. Since a thin lens with a thickness of about 2 mm to 4 mm cannot adjust the magnifying power b/a, a thick lens with a thickness of 17 mm is used in the embodiment.

When the ideal image height is denoted as y' and the real image height is denoted as Y, the distortion (distortion aberration) caused by the condenser lens 7 is given by the following equation:

$$\text{Dist} (\%) = \frac{Y - y'}{y'} \times 100 \quad \cdot\cdot\cdot (2)$$

When the aperture position of the condenser lens 7 (convex lens) is located on the image side, the distortion is a positive value to make the image (image height Y) projected to the digital mirror 8 becomes larger than in reality due to the distortion. For example, when Dist = +10(%), the real image height Y = 1.1 y'.

In other words, when the distortion is a positive value, the image projected to the digital mirror 8 becomes larger than the calculated irradiated area sb/a. For example, suppose that the light emitted from the light source 5 is collected by the condenser lens 7 and irradiated to the digital mirror 8 when the light source has an 8.4 mm × 8.4 mm square shape. In this case, if the magnifying power b/a = 5, the irradiated area on the digital mirror 8 is calculated to have a 42.0 mm × 42.0 mm square shape.

However, since the image height Y becomes large due to the positive-value distortion, some of light deflects from the irradiated area on the digital mirror 8 and is wasted. Therefore, the size of the light source 5 is changed to have a 7.6 mm × 7.6 mm square shape, as being reduced by about 10%, to allow the light from the light source 5 to fit in the irradiated area on the digital mirror 8 without waste.

In fact, the light from the light source 5 has only to fit within the range of the mirror unit 8a of the digital mirror 8. Therefore, the size of the light source 5 (light-emitting face) is set smaller than a theoretical size in consideration of the positive-value distortion. Such an operation makes it easy for the vehicle headlight device 1 to fit the light from the light source 5 in the range of the mirror unit 8a without particularly changing the arrangement of the structural members.

An optical system composed of two or more condenser lenses 7a, 7b is illustrated in FIG. 4B. Even in this case, a longitudinal width W of the light source 5 is set smaller than a diameter M of the condenser lens 7a.

In the optical system composed of the two or more condenser lenses 7a, 7b, the distortion may be a negative value. On this occasion, the image (image height Y) projected to the digital mirror 8 becomes smaller than in reality due to the distortion.

Thus, when the distortion is a negative value, the image projected to the digital mirror 8 becomes smaller than the calculated irradiated area sb/a. In consideration of this fact, the size of the light source 5 (light-emitting face) is set larger than the theoretical size. This prevents the light from the light source 5 from becoming too small for the area of the mirror unit 8a when the light irradiates the mirror unit 8a.

(Second Embodiment)

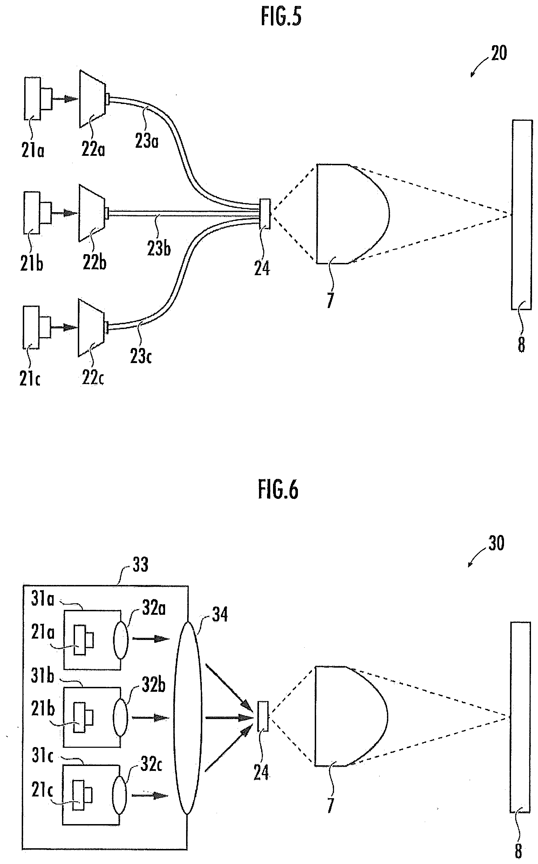

Referring next to FIG. 5, a vehicle headlight device 20 having a light source composed of plural laser diodes (hereinafter called LDs) will be described. Note that the description of the same structural elements as those in the first embodiment is omitted.

The light source of the vehicle headlight device 20 is composed of three blue LDs 21a to 21c ("light-emitting elements" in the present invention). Reflectors 22a to 22c, each of which reflects and guides laser light to one end of each of multifibers to be described later, are provided for the blue LDs 21a to 21c, respectively.

Further, multifibers 23a to 23c ("optical fibers" in the present invention) are connected to the reflectors 22a to 22c, respectively. The multifibers 23a to 23c are bundled on the other end side, and the ends (light-emitting faces) are arranged on the front side of a phosphor plate 24. Thus, the laser light emitted from the blue LDs 21a to 21c is irradiated to the phosphor plate 24.

Since the laser light emitted from the plural LDs is irradiated to the phosphor plate 24 in this way, the vehicle headlight device 20 can enhance the intensity of fluorescence excited in the phosphor plate 24. Further, the excitation light of the phosphor plate 24 is collected by the condenser lens 7 to enter the digital mirror 8 in the end. Such an optical system can realize a simple and small vehicle headlight device.

Instead of the blue LDs 21a to 21c, a light source composed of three white LDs may be used. As the white LD, there is a structure in which the blue LD is covered with a phosphor. In this case, such a property that laser light of the blue LD is excited by the phosphor to become white is used.

When the white LD is used, a diffuser plate can be used instead of the phosphor plate 24. Since the diffuser plate can form the laser light into a round (elliptical) shape with high optical transmittance, the laser light can enter the condenser lens 7 efficiently. Note that the other ends of the multifibers 23a to 23c may be bundled by a fiber bundle to guide the laser light directly to the condenser lens 7.

Further, the light-emitting elements of the light source may be a red LD, a green LD, and a blue LD (RGB laser). In this case, it is also preferred to use the diffuser plate instead of the phosphor plate 24 so that three RGB colors can be mixed efficiently. The LDs are used in the embodiment, but LEDs may also be used. In the case of a light source using one LD or LED, one multifiber is used.

(Third Embodiment)

Referring next to FIG. 6, a vehicle headlight device 30 having a light source, composed of plural LDs, and a condenser lens will be described. Note that the same structural elements as those in the vehicle headlight device 20 of the second embodiment are given the same reference numerals to omit the description thereof.

The light source of the vehicle headlight device 30 is composed of three blue LDs 21a to 21c housed inside light-collecting casings 31a to 31c, respectively. The inside of each of the light-collecting casings 31a to 31c is the same reflecting mirror surface as that of each reflector to reflect laser light emitted from each of the blue LDs 21a to 21c and guide the reflected light in the direction of each of condenser lenses 32a to 32c, respectively.

Further, the light-collecting casings 31 a to 31c are stored in a larger light-collecting casing 33. The inside of the light-collecting casing 33 is a reflecting mirror surface to reflect light emitted from the condenser lenses 32a to 32c and guide the reflected light in the direction of a larger condenser lens 34.

A phosphor plate 24 is placed in front of the condenser lens 34. Thus, the light emitted from the condenser lens 34 is irradiated to the phosphor plate 24, and fluorescence is excited from the phosphor plate 24. Then, the excitation light of the phosphor plate 24 is collected by the condenser lens 7 to enter the digital mirror 8 in the end. Such an optical system can also realize a simple and small vehicle headlight device.

Instead of the blue LDs 21 a to 21 c, a light source composed of three white LDs may also be used. In this case, a diffuser plate can be used instead of the phosphor plate 24. Further, light-collecting casings, in which a red LD, a green LD, and a blue LD are housed respectively, may be placed inside a light-collecting casing capable of storing these light-collecting casings.

Even using two blue LDs (or white LDs), a similar optical system can be constructed. One blue LD can also be used. In this case, however, the larger light-collecting casing 33 is unnecessary, that is, the blue LD has only to be arranged to make the laser light of the blue LD enter the phosphor plate 24 directly through the condenser lens of the light-collecting casing of the blue LD. The LDs are used in the embodiment, but LEDs may also be used.

(Fourth Embodiment)

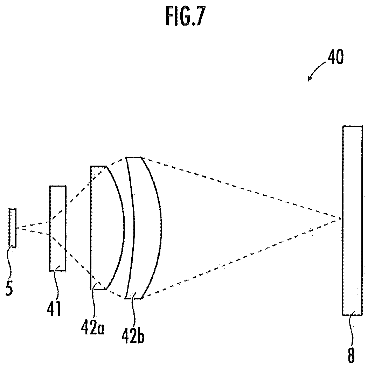

Finally, a vehicle headlight device 40 having two or more condenser lenses will be described with reference to FIG. 7. Note that the same structural elements as those in the vehicle headlight device 20 of the second embodiment are given the same reference numerals to omit the description thereof.

A light source 5 of the vehicle headlight device 40 is composed of only one LED. Further, a first condenser lens 42a and a second condenser lens 42b are arranged in front of the light source 5. As described with reference to FIG. 4B, when two or more condenser lenses are arranged next to each other, the distortion may be a negative value. On this occasion, an image projected to a digital mirror becomes smaller than in reality due to the distortion.

Therefore, a plate glass 41 having a predetermine thickness is placed between the light source 5 and the first condenser lens 42a adjacent to the light source 5 to adjust the size of the image. As illustrated in FIG. 7, light emitted from the light source 5 is refracted by the plate glass 41 and hence the angle of the light is widened, thus entering the first condenser lens 42a and the second condenser lens 42b.

After that, light collected by the second condenser lens 42b enters the digital mirror 8. Since positive distortion is obtained through the plate glass 41, the LED light can expand the irradiation range on the digital mirror 8 without changing the size of the light source 5. Note that the light source 5 may be composed of plurality of LEDs, or an LD may be used instead of the LED.

As described above, since the vehicle headlight device of each embodiment can adjust the size of an image to be projected to the digital mirror, light emitted from the light source (light-emitting face) enters the digital mirror without waste. This can lead to generating a light distribution pattern efficiently even when the device has a simple structure.

The aforementioned embodiments are just illustrative examples of the present invention, and various other modifications can be considered. For example, in the vehicle headlight device 1, the light source may be a large, arrayed type light source composed of a total of 15 LEDs each having a 0.5 mm × 0.5 mm square shape (in a 3 × 5 matrix). The wavelength of each LED can also be changed appropriately.

Although the condenser lens 7 of the vehicle headlight device 1 is a thick convex lens having convex portions in the front and rear directions, the present invention is not limited thereto. For example, a condenser lens on which a glass having a high refractive index is mounted on one side (the side of the light source) may also be used.

Further, in the vehicle headlight device 20, condenser lenses having high transmittance may be used instead of the reflectors 22a to 22c to collect and guide laser light from the blue LDs 21a to 21c to the multifibers 23a to 23c.

Description of reference numerals

1, 20, 30, 40...vehicle headlight device, 2...optical system, 3...control device (control unit), 4...imaging device, 5...light source (light-emitting face), 5a, 5b, 5c...LED (light-emitting element), 5d...LED package, 7, 7a, 7b, 32a, 32b, 32c, 34, 42a, 42b...condenser lens (light-collecting optical member), 8...digital mirror (collection mirror), 8a...mirror unit, 8b...mirror package, 9...projection lens (projection optical member), 10...casing, 10a...translucent cover, 11...controller, 12...memory, 13...light source control unit, 14... actuator control unit, 21a, 21b, 21c... blue LD (light-emitting element), 22a, 22b, 22c...reflector, 23a, 23b, 23c...multifiber (optical fiber), 24...phosphor plate, 31a, 31b, 31c, 33...light-collecting casing, 41...plate glass.

**Claims**

1. A vehicle headlight device comprising:

   a light-emitting face on which at least one light-emitting element is arranged;
   a light-collecting optical member which collects light emitted from the light-emitting face;
   a collection mirror configured by arranging a plurality of inclinable mirror elements in such a manner that light entering from the light-collecting optical member is reflected by each of the mirror elements;
   a projection optical member which projects a light distribution pattern of light reflected by the collection mirror to an irradiated area ahead of a vehicle; and
   a control unit which performs processing to control inclined states of the plurality of mirror elements of the collection mirror to change an illumination distribution of the light distribution pattern, wherein
   a shape of the light-emitting face and a shape of the collection mirror are similar to each other.

2. The vehicle headlight device according to claim 1, wherein
   when distortion of the light-collecting optical member is a positive value, a size of the light-emitting face is set smaller than a theoretical size calculated based on a ratio b/a of distance a between the light-emitting face and the light-collecting optical member, and distance b between the light-collecting optical member and the collection mirror, and an irradiated area set on the collection mirror, and
   when the distortion of the light-collecting optical member is a negative value, the size of the light-emitting face is set larger than the theoretical size.

3. A vehicle headlight device comprising:

   a light-emitting face on which at least one light-emitting element is arranged;

a light-collecting optical member which collects light emitted from the light-emitting face;

a collection mirror configured by arranging a plurality of inclinable mirror elements in such a manner that light entering from the light-collecting optical member is reflected by each of the mirror elements;

a projection optical member which projects a light distribution pattern of light reflected by the collection mirror to an irradiated area ahead of a vehicle; and

a control unit which performs processing to control inclined states of the plurality of mirror elements of the collection mirror to change an illumination distribution of the light distribution pattern, wherein

when distortion of the light-collecting optical member is a positive value, a size of the light-emitting face is set smaller than a theoretical size calculated based on a ratio b/a of distance a between the light-emitting face and the light-collecting optical member, and distance b between the light-collecting optical member and the collection mirror, and an irradiated area set on the collection mirror, and

when the distortion of the light-collecting optical member is a negative value, the size of the light-emitting face is set larger than the theoretical size.

4. The vehicle headlight device according to any one of claims 1 to 3, wherein the light-emitting element is a laser diode or a light-emitting diode.

5. The vehicle headlight device according to claim 4, wherein the light-emitting face is formed by bundling optical fibers to guide light emitted from a plurality of the laser diode or a plurality of the light-emitting diode.

6. The vehicle headlight device according to any one of claims 1 to 5, further comprising a diffuser plate arranged between the light-emitting face and the light-collecting optical member to diffuse light emitted from the light-emitting face, or a phosphor plate with a phosphor applied thereto, which is arranged between the light-emitting face and the light-collecting optical member.

# FIG.1

FIG.2

5

5d

5a    5b    5c

FIG.3

8

8b

8a

## FIG.4A

## FIG.4B

FIG.5

FIG.6

# FIG.7

Europäisches
Patentamt

European
Patent Office

Office européen
des brevets

## EUROPEAN SEARCH REPORT

Application Number

EP 17 15 6556

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/377446 A1 (BHAKTA VIKRANT R [US]) 31 December 2015 (2015-12-31) * paragraphs [0036] - [0070]; figures 1-15 * | 1-4,6 | INV. F21S8/12 |
| X | US 2015/345729 A1 (LIAO CHIEN-CHUNG [TW] ET AL) 3 December 2015 (2015-12-03) * paragraphs [0021] - [0064]; figures 1-10 * | 1-5 | |
| X | US 2015/285458 A1 (DASSANAYAKE MAHENDRA SOMASARA [US] ET AL) 8 October 2015 (2015-10-08) * paragraphs [0012] - [0022]; figures 1-4 * | 1-4 | |
| X | US 2015/377430 A1 (BHAKTA VIKRANT R [US]) 31 December 2015 (2015-12-31) * paragraphs [0019] - [0046]; figures 1-9 * | 1-4,6 | |
| X | DE 10 2014 013202 B3 (AUDI AG [DE]) 4 February 2016 (2016-02-04) * paragraphs [0015] - [0040]; figures 1-6 * | 1-6 | TECHNICAL FIELDS SEARCHED (IPC) F21S B60Q |
| A | US 2005/174771 A1 (CONNER ARLIE R [US]) 11 August 2005 (2005-08-11) * the whole document * | 1-6 | |

-/--

The present search report has been drawn up for all claims

| Place of search | Date of completion of the search | Examiner |
|---|---|---|
| Munich | 30 August 2017 | Sarantopoulos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 17 15 6556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Lens (optics) - From Wikipedia, the free encyclopedia", , 18 October 2010 (2010-10-18), pages 1-6, XP055102319, Retrieved from the Internet: URL:https://en.wikipedia.org/w/index.php?title=Lens_%28optics%29&oldid=707436021 [retrieved on 2014-02-14] * the whole document * ----- | 2,3 | |

TECHNICAL FIELDS
SEARCHED      (IPC)

The present search report has been drawn up for all claims

| Place of search | Date of completion of the search | Examiner |
|---|---|---|
| Munich | 30 August 2017 | Sarantopoulos, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 17 15 6556

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2017

| Patent document cited in search report | | Publication date | Patent family member(s) | | Publication date |
|---|---|---|---|---|---|
| US 2015377446 | A1 | 31-12-2015 | NONE | | |
| US 2015345729 | A1 | 03-12-2015 | CN | 105276479 A | 27-01-2016 |
| | | | TW | 201546397 A | 16-12-2015 |
| | | | US | 2015345729 A1 | 03-12-2015 |
| US 2015285458 | A1 | 08-10-2015 | CN | 104972959 A | 14-10-2015 |
| | | | DE | 102015205266 A1 | 08-10-2015 |
| | | | RU | 2015112827 A | 27-10-2016 |
| | | | US | 2015285458 A1 | 08-10-2015 |
| US 2015377430 | A1 | 31-12-2015 | NONE | | |
| DE 102014013202 | B3 | 04-02-2016 | DE | 102014013202 B3 | 04-02-2016 |
| | | | EP | 2993390 A1 | 09-03-2016 |
| US 2005174771 | A1 | 11-08-2005 | CN | 1918498 A | 21-02-2007 |
| | | | EP | 1714176 A2 | 25-10-2006 |
| | | | JP | 2007522674 A | 09-08-2007 |
| | | | TW | I361295 B | 01-04-2012 |
| | | | US | 2005174771 A1 | 11-08-2005 |
| | | | WO | 2005078496 A2 | 25-08-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4055578 B

- JP 2016008043 A